# EUROPÄISCHE PATENTSCHRIFT

(11) **EP 3 638 535 B1**
(45) Veröffentlichungstag und Bekanntmachung des Hinweises auf die Patenterteilung: **02.11.2022**
(21) Anmeldenummer: 18746073.8
(22) Anmeldetag: 14.06.2018
(51) Int. Cl.: B60L 15/20, G01P 3/487

(54) **VORRICHTUNG ZUM STEUERN UND/ODER REGELN VON GESCHWINDIGKEITEN EINES ELEKTROLEICHTFAHRZEUGS, AUFSETZBOX UND VERFAHREN ZUR VERWENDUNG**
DEVICE FOR PERFORMING OPEN-LOOP AND/OR CLOSED-LOOP CONTROL OF SPEEDS OF A LIGHT ELECTRIC VEHICLE, ROOF BOX AND METHOD FOR USE THEREOF
DISPOSITIF DE COMMANDE ET/OU DE RÉGULATION DE VITESSES D'UN VÉHICULE ÉLECTRIQUE LÉGER, BOÎTIER EMPILABLE ET PROCÉDÉ D'UTILISATION

(30) Priorität: 14.06.2017 DE 102017005612
(43) Veröffentlichungstag der Anmeldung: 22.04.2020
(73) Patentinhaber: Badass Ebikes GmbH, 63768 Hösbach (DE)
(72) Erfinder: MONACO, Luigi, 63743 Aschaffenburg (DE); ELSESSER, Peter, 63877 Sailauf (DE); RIEDENAUER, Andreas, DE-63743 Aschaffenburg (DE)
(74) Vertreter: Nitz, Astrid
(86) Internationale Anmeldenummer: PCT/DE2018/000183
(87) Internationale Veröffentlichungsnummer: WO 2018/228631

(56) Entgegenhaltungen:
- EP-A1- 0 650 031
- EP-A2- 0 402 620
- Festivejelly: "Ebike derestrictor", , 23. August 2016 (2016-08-23), XP055505855, Gefunden im Internet: URL:http://www.pedelecs.co.uk/forum/thread s/ebike-derestrictor.25266/ [gefunden am 2018-09-10]

## Beschreibung

Die Erfindung betrifft eine Vorrichtung zum Steuern und/oder Regeln von Geschwindigkeiten eines Elektroleichtfahrzeugs nach dem Oberbegriff von Anspruch 1 und ein Verfahren zur Verwendung einer Vorrichtung zum Steuern und/oder Regeln von Geschwindigkeiten eines Elektroleichtfahrzeugs nach dem Oberbegriff von Anspruch 6.

Bekannt sind Steuerungs- und Regelungsvorrichtungen für Elektrofahrräder, die eine Geschwindigkeitsmessung durch Signalsendemittel an den Rädern ermöglichen, deren Bewegung über Reedschalter detektiert wird und deren Geschwindigkeit bestimmt wird.

Nachteilig ist es, dass eine äußere Einstellung eine Begrenzung der Geschwindigkeit des Elektromotors bewirkt, die eine Einschränkung für die fahrende Person bedeutet. Aufgabe der vorliegenden Erfindung ist es, eine einfache und sichere Vorrichtung zum Steuern und Regeln von Geschwindigkeiten eines Elektroleichtfahrzeugs bereitzustellen, die eine Geschwindigkeitsbeeinflussung je nach Nutzerinteresse ermöglicht.

Die Aufgabe wird gelöst durch eine Vorrichtung zum Steuern und/oder Regeln von Geschwindigkeiten eines Elektroleichtfahrzeugs, insbesondere Elektrofahrrads, umfassend ein Einwirkungsmittel zur Beeinflussung einer Geschwindigkeitseinheit für einen Elektromotor des Elektrofahrzeugs, zum Steuern und/oder Regeln der Geschwindigkeitseinheit, eine Recheneinheit zur Ermittlung einer Rechengeschwindigkeit, ein Empfangsmittel für die Bewegungssignale der Bewegung des Rades, umfassend einen Reedschalter, der bei Unterschreiten oder Überschreiten einer eine vorgegebene Zeit zu haltenden Grenzmagnetfeldstärke zu schließen oder zu öffnen ist, ein erstes Signalsendemittel zum Senden von Bewegungssignalen einer Bewegung eines Rades wobei das erste Signalsendemittel an einer Speiche des Rades des Elektroleichtfahrzeugs anzuordnen ist, wobei das erste Signalsendemittel ein Magnetmittel umfasst und Bewegungsmagnetsignale mit Magnetfeldern sendet, und wobei das erste Signalsendemittel im Wesentlichen außerhalb einer Feldreichweite für das Empfangsmittel vorgesehen wird, und einen Permanentmagnet umfasst, ein zweites Signalsendemittel für, mit Bewegungen des ersten Signalsendemittels entsprechend aufgebaute, zeitabhängige Signale, und ein Verstärkungsmittel, das Verstärkungssignale zur Verstärkung der Signale des zweiten Signalsendemittels bereitstellt, so dass durch einen sich aus den resultierenden Magnetfeldstärken im Wesentlichen am Ort des Empfangsmittels ergebenden Schaltverlauf des Empfangsmittels, sich eine Einwirkung auf die Recheneinheit ergibt, so dass in vorgegebenen Zeiträumen eine vorgegebene Grenzgeschwindigkeit im Sinne der Recheneinheit nicht überschreitbar ist, wobei durch das Einwirkungsmittel bei der Beeinflussung der Geschwindigkeitseinheit die Grenzgeschwindigkeit mittels einer reellen Geschwindigkeit der Geschwindigkeitseinheit für einen Elektromotor des Elektroleichtfahrzeugs überschreitbar ist, wobei das erste Signalsendemittel entlang der Speiche im Wesentlichen außerhalb einer Feldreichweite für das Empfangsmittel versetzt anzuordnen ist, dadurch gekennzeichnet, dass das Verstärkungsmittel ein Magnetmittel mit den Signalen des zweiten Signalsendemittels parallelen, gleichorientierten Magnetfeldlinien umfasst.

Die vorliegende Erfindung ermöglicht es, durch eine einfach einzurichtende Zusatzkomponente, ein Elektroleichtfahrzeug mit vom Nutzer gewünschten Geschwindigkeiten zu betreiben, ohne Geschwindigkeitsbegrenzende Komponenten abzubauen. Die Vorrichtung ist weiterhin kompakt und baut schmal. Es wird insbesondere somit ein energiesparender Permanentmagnet zum Vorspannen eines Reedschalters verwendet, der in einem Standard-Pedelec zur Geschwindigkeitsmessung verwendet wird.

Die Stärke des Permanentmagneten ist so ausgelegt, dass der Reedschalter gerade nicht geschlossen wird, also unterhalb der Schaltschwelle. Durch die zusätzliche zweite Signalsendemittel, Magnetspule, wird die Bewegung eines erste Signalsendemittels, eines am Rad angebrachten Speichenmagnets, der die übliche Geschwindigkeitsmessung des Pedelecs darstellt, simuliert. Die Magnetfeldrichtung ist in diesem Fall dieselbe wie die des Permanentmagneten.

Vorteilhaft is es, dass durch den Permanentmagneten der Speichenmagnet nicht so stark ausgelegt werden muss, um den Reedschalter auszulösen. Die Vorrichtung baut kompakter, mit einer freien Positionierung im Wesentlichen gleichen Abstand und benötigt lediglich kleinere Batterien und damit weniger Energie für die Spule, da diese - insbesondere aufgrund der Nähe zum Reedschalter und der Vorspannung der den Permanentmagneten - mit einem schwächeren Feld arbeiten kann.

Der Einfluss des ersten Signalmittels, beispielsweise in Form eines Speichenmagneten, auf den Reedschalter so gering wie möglich gehalten wird, beispielsweise durch Versetzen an dem Radhalterarm, damit sich das Feld nicht auch noch am Reedschalter überlagert und somit eine unkontrollierbare Überlagerung bildet. Der Permanentmagnet lässt somit einen eventuellen Einfluss des Speichenmagneten nicht auf den Reedschalter durchdringen, da er sowohl hinsichlich Polarität als auch Stärke angepasst wird, schirmt ihn ab.

Das erste Signalsendemittel ist entlang der Speiche im Wesentlichen außerhalb Feldreichweite für das Empfangsmittel versetzt anzuordnen.

Vorteilhaft ist es, wenn das zweite Signalsendemittel eine Magnetspule umfasst, die zeitabhängig zu betätigen ist, ein Magnetmittel mit den Bewegungsmagnetsignalen parallelen, gleichorientierten Magnetfeldlinien und/oder einen Permanentmagneten.

Vorteilhaft ist es, wenn das Verstärkungsmittel parallel zu dem Empfangsmittel, insbesondere in einem vorbestimmten Abstand, insbesondere von etwa drei Durchmessern des Empfangsmittels, angeordnet ist, so dass durch gleichgerichtete Signale des zweiten Signalsendemittels eine Auslösung des Empfangsmittels erreichbar ist.

Vorteilhaft ist es, wenn das zweite Signalsendemittel parallel zu dem Empfangsmittel, insbesondere unterhalb des Empfangsmittels derart in einem vorbestimmten Abstand angeordnet ist, dass die Signale des zweiten Signalsendemittels das Empfangsmittel zeitabhängig mit einer Radumdrehungsfrequenz korrespondierenden Frequenz auslösen, insbesondere den Reedschalter schließen.

Vorteilhaft ist es, wenn das ein Abschirmmittel vorgesehen ist, das Abschirmsignale zum Entgegenwirken gegen die Bewegungssignale des Sendesignalmittels bereitstellt, insbesondere ein Magnetmittel mit den Bewegungsmagnetsignalen entgegengesetzten Magnetfeldlinien, wobei das Abschirmmittel insbesondere einen Permanentmagneten umfasst.

Vorteilhaft ist es, wenn das Abschirmmittel in einem vorbestimmten Abstand zum Empfangsmittel und/oder in einem vorbestimmten minimalen Abstand zum ersten Signalsendemittel zum Senden von Bewegungssignalen einer Bewegung eines Rades angeordnet ist, so dass bei eine vom Empfangsmittel abhängige Schaltschwelle innerhalb des vorgegebenen Positionsspielraums nicht überschritten ist.

Vorteilhaft ist es, wenn der vorbestimmte Abstand des Abschirmmittels mit der Stärke des Abschirmmittels und/oder der Stärke des ersten Signalsendemittels und/oder dem Abstand des ersten Signalsendemittels und/oder der Stärke des zweiten Signalsendemittels und/oder dem Abstand des zweiten Signalsendemittels korrespondiert, so dass die Schaltschwelle des Empfangsmittels nur in vorbestimmten Zeiten überschritten ist.

Vorteilhaft ist es, wenn das Abschirmmittel und/oder des zweite Signalsendemittel und/oder das Verstärkungsmittel in einer Aufsetzbox angeordnet ist, die in die Nähe des Empfangsmittels insbesondere auf einen Radträger zu setzen ist, dass insbesondere die Aufsetzbox mit integriertem Empfangsmittel ausgestattet ist.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind.

Es zeigen:
- Fig. 1: eine erfindungsgemäße Vorrichtung in schematischer Darstellung,
- Fig. 2: ein beispielhafter Magnetfeldverlauf und
- Fig. 3: ein beispielhafter Magnetfeldstärkenverlauf in zeitlicher Darstellung.

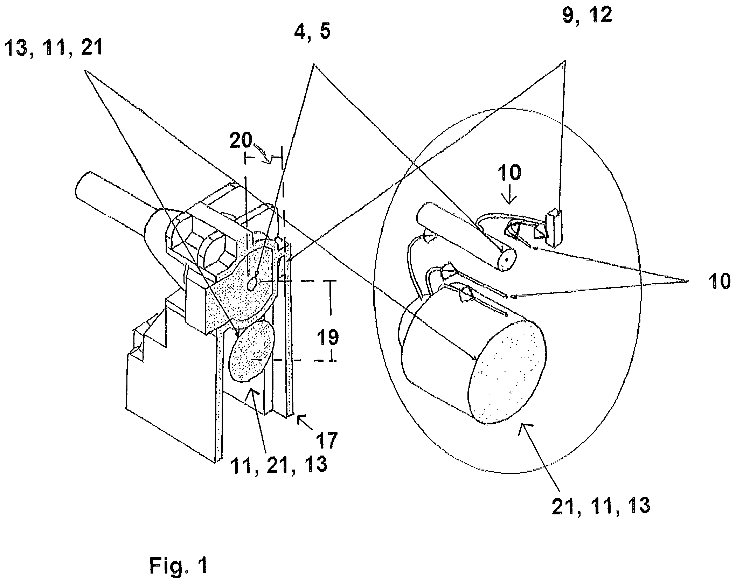

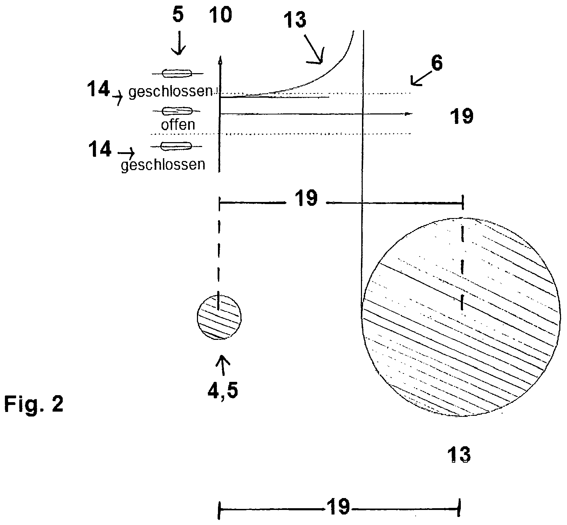

Fig. 1 zeigt eine erfindungsgemäße Vorrichtung 1 in schematischer Darstellung. Die Vorrichtung 1 zum Steuern und/oder Regeln von Geschwindigkeiten eines Elektroleichtfahrzeugs, insbesondere Elektrofahrrads, zeigt ein Empfangsmittel 4, ein Reedschalter 5, für die Bewegungssignale der Bewegung des Rades, umfassend einen Reedschalter 5, der bei Unterschreiten oder Überschreiten einer eine vorgegebene Zeit zu haltenden Schaltschwelle 14, gezeigt in Fig. 2, Grenzmagnetfeldstärke 6, zu schließen/öffnen ist, ein nicht dargestelltes erstes Signalsendemittel zum Senden von Bewegungssignalen einer Bewegung eines Rades, für Magnetfelder, mit Bewegungsmagentsignalen, an einer Speiche des Rades, umfassend ein Magnetmittel, das im Wesentlichen außerhalb einer Feldreichweite für das Empfangsmittel 4 vorgesehen ist, wobei das erste Signalsendemittel einen Permanentmagnet umfasst, ein zweites Signalsendemittel 13 für mit Bewegungen des ersten Signalsendemittels entsprechend aufgebaute, zeitabhängige Signale, und ein Verstärkungsmittel 9, das Verstärkungssignale zur Verstärkung der Signale des zweiten Signalsendemittels bereitstellt, ein Magnetmittel 12 mit den Signalen des zweiten Signalsendemittels 13 parallelen, gleichorientierten Magnetfeldlinien 10, so dass durch ein sich aus den resultierenden Feldstärken, Magnetfeldstärken, ergebender Schaltverlauf des Empfangsmittels 4 und daraus ergebende Einwirkung auf das Recheneinheit zur Ermittlung einer Rechengeschwindigkeit in vorgegebenen Zeiträumen eine vorgegebene Grenzgeschwindigkeit nicht überschreitbar ist, wobei durch das Steuerungsmittel bei der Steuerung der Geschwindigkeitseinheit die Grenzgeschwindigkeit mit einer reellen Geschwindigkeit des Elektroleichtfahrzeugs überschreitbar ist.

Fig. 2 zeigt einen beispielhaften Magnetfeldverlauf, wobei eine Magnetfeldstärke eines zweiten, zeitabhängigen Signalsendemittels 13 in Form eines Magnetmittels gegenüber dem Abstand 19 zum Empfangsmittel 4, einem Reedschalter 5 aufgetragen ist. Weiterhin ist symbolhaft eine Schaltschwelle 14 des Reedschalters 5 dargestellt, wobei der Reedschalter 5 im Bereich geringer Feldstärken geöffnet ist und bei betragsmäßig größeren Feldstärken schließt und somit schaltet. An dem Ort des Reedschalters 5 wirkt weiterhin ein nicht dargestelltes Verstärkungsmittel 9, dargestellt in Fig. 1, das zu einer Feldstärkenanhebung iim Bereich des Reedschalters von einem vorbestimmten Stärkewert, insbesondere beispielhaft Fig. 1, führt, so dass das Signalsendemittel 13 für eine erfolgreiche Schaltung lediglich eine geringere Feldstärke aufweisen muss und somit kleiner ausgebildet sein kann. Weiterhin ist der Energieverbrauch des Signalsendemittels 13, einer Magnetspule, damit reduziert, wodurch ein Batteriemittel zur Energieversorgung kleiner ausgebildet sein kann oder beispielsweise bei geringerer Stärke der Abstand 19 nach Bedarf eingestellt werden kann.

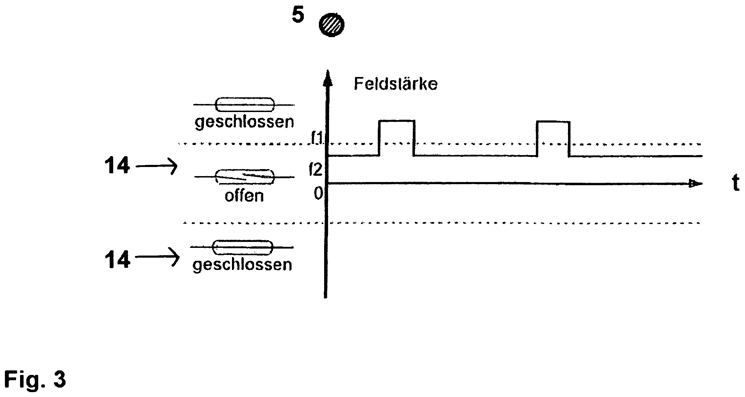

Fig. 3 zeigt einen beispielhaften Magnetfeldstärkenverlauf am Ort des Reedschalters 5 in zeitlicher Darstellung.

### BEZUGSZEICHENLISTE

- 1: Vorrichtung zum Steuern und/oder Regeln von Geschwindigkeiten eines Elektroleichtfahrzeugs
- 4: Empfangsmittel
- 5: Reedschalter
- 6: Grenzmagnetfeldstärke
- 9: Verstärkungsmittel
- 10: Magnetfeldlinien
- 11: Magnetmittel (13)
- 12: Magnetmittel (9)
- 13: zweites Signalsendemittel
- 14: Schaltschwelle
- 17: Aufsetzbox
- 18: Magnetfeldlinien
- 19: Abstand (13)
- 20: Abstand (9)
- 21: Magnetspule

## Patentansprüche

1. Vorrichtung (1) zum Steuern und/oder Regeln von Geschwindigkeiten eines Elektroleichtfahrzeugs, insbesondere Elektrofahrrads, umfassend ein Einwirkungsmittel zur Beeinflussung einer Geschwindigkeitseinheit für einen Elektromotor des Elektrofahrzeugs, zum Steuern und/oder Regeln der Geschwindigkeitseinheit,
eine Recheneinheit zur Ermittlung einer Rechengeschwindigkeit,
ein Empfangsmittel (4) für die Bewegungssignale der Bewegung des Rades, umfassend einen Reedschalter (5), der bei Unterschreiten oder Überschreiten einer eine vorgegebene Zeit zu haltenden Grenzmagnetfeldstärke (6) zu schließen oder zu öffnen ist,
ein erstes Signalsendemittel zum Senden von Bewegungssignalen einer Bewegung eines Rades, wobei das erste Signalsendemittel an einer Speiche des Rades des Elektroleichtfahrzeugs anzuordnen ist, wobei das erste Signalsendemittel ein Magnetmittel umfasst und Bewegungsmagnetsignale mit Magnetfeldern sendet, und wobei das erste Signalsendemittel im Wesentlichen außerhalb einer Feldreichweite für das Empfangsmittel (4) vorgesehen wird, und einen Permanentmagnet umfasst, ein zweites Signalsendemittel (13) für, mit Bewegungen des ersten Signalsendemittels entsprechend aufgebaute, zeitabhängige Signale, und
ein Verstärkungsmittel (9), das Verstärkungssignale zur Verstärkung der Signale des zweiten Signalsendemittels bereitstellt, so dass durch einen sich aus den resultierenden Magnetfeldstärken im Wesentlichen am Ort des Empfangsmittels (4) ergebenden Schaltverlauf des Empfangsmittels (4), sich eine Einwirkung auf die Recheneinheit ergibt, so dass in vorgegebenen Zeiträumen eine vorgegebene Grenzgeschwindigkeit im Sinne der Recheneinheit nicht überschreitbar ist, wobei durch das Einwirkungsmittel bei der Beeinflussung der Geschwindigkeitseinheit die Grenzgeschwindigkeit mittels einer reellen Geschwindigkeit der Geschwindigkeitseinheit für einen Elektromotor des Elektroleichtfahrzeugs überschreitbar ist, wobei das erste Signalsendemittel entlang der Speiche im Wesentlichen außerhalb einer Feldreichweite für das Empfangsmittel (4) versetzt anzuordnen ist **dadurch gekennzeichnet, dass** das Verstärkungsmittel (9) ein Magnetmittel (12) mit den Signalen des zweiten Signalsendemittels (13) parallelen, gleichorientierten Magnetfeldlinien (10) umfasst.

2. Vorrichtung nach Anspruch 1, **dadurch gekennzeichnet, dass** das zweite Signalsendemittel (13) eine Magnetspule (21) umfasst, die zeitabhängig zu betätigen ist.

3. Vorrichtung nach einem der Ansprüche 1 bis 2, **dadurch gekennzeichnet, dass** das Verstärkungsmittel (9) parallel zu dem Empfangsmittel (4), insbesondere in einem vorbestimmten Abstand (20), insbesondere von etwa drei Durchmessern des Empfangsmittels (4), angeordnet ist, so dass durch gleichgerichtete Signale des zweiten Signalsendemittels (13) eine Auslösung des Empfangsmittels (4) erreichbar ist.

4. Vorrichtung nach einem der Ansprüche 1 bis 3, **dadurch gekennzeichnet, dass** das zweite Signalsendemittel (13) parallel zu dem Empfangsmittel (4), insbesondere unterhalb des Empfangsmittels (4) derart in einem vorbestimmten Abstand (19) angeordnet ist, dass die Signale des zweiten Signalsendemittels (13) das Empfangsmittel (4) zeitabhängig mit einer Radumdrehungsfrequenz korrespondierenden Frequenz auslösen, insbesondere den Reedschalter (5) schließen.

5. Vorrichtung nach einem der Ansprüche 1 bis 4 **dadurch gekennzeichnet, dass** die Vorrichtung eine Aufsetzbox umfasst, wobei das zweite Signalsendemittel (13) und/oder das Verstärkungsmittel (9) in der Aufsetzbox (17) angeordnet ist, die in die Nähe des Empfangsmittels (4) insbesondere auf einen Radträger zu setzen ist.

6. Verfahren zur Verwendung einer Vorrichtung (1) zum Steuern und/oder Regeln von Geschwindigkeiten eines Elektroleichtfahrzeugs, insbesondere Elektrofahrrads, nach einem der Ansprüche 1 bis 5,
wobei durch ein Einwirkungsmittel zur Beeinflussung einer Geschwindigkeitseinheit für einen Elektromotor des Elektrofahrzeugs auf die Geschwindigkeitseinheit eingewirkt wird, zum Steuern und/oder Regeln der Geschwindigkeitseinheit,
wobei durch eine Recheneinheit zur Ermittlung einer Rechengeschwindigkeit auf eine Recheneinheit eingewirkt wird,
wobei durch ein Empfangsmittel (4) Bewegungssignale der Bewegung des Rades, empfangen werden, wobei das Empfangsmittel (4) einen Reedschalter (5) umfasst, der bei Unterschreiten oder Überschreiten einer eine vorgegebene Zeit zu haltenden Grenzmagnetfeldstärke (6), geschlossen oder geöffnet wird,
wobei ein erstes Signalsendemittel zum Senden von Bewegungssignalen an einer Speiche des Rades angeordnet wird, wobei das erste Signalsendemittel ein Magnetmittel umfasst und Bewegungsmagnetsignale mit Magnetfeldern sendet, und wobei das este Signalsendemittel außerhalb einer Feldrichtweite für das Empfangsmittel (4) vorgesehen wird, und einen Permanentmagnet umfasst,
wobei ein zweites Signalsendemittel (13) für mit Bewegungen des ersten Signalsenentsprechend aufgebaute, zeitabhängige Signale, vorsehen wird, wobei ein Verstärkungsmittel (9) Verstärkungssignale zur Verstärkung der Signale des zweiten Signalsendemittels bereitstellt, so dass durch einen sich aus den resultierenden Feldstärken im Wesentlichen am Ort des Empfangsmittels (4) ergebenden Schaltverlauf des Empfangsmittels (4), sich eine Einwirkung auf die Recheneinheit ergibt, so dass in vorgegebenen Zeiträumen eine vorgegebene Grenzgeschwindigkeit im Sinne der Recheneinheit nicht überschritten wird, wobei durch das Einwirkungsmittel bei der Beeinflussung der Geschwindigkeitseinheit die Grenzgeschwindigkeit mittels einer reellen Geschwindigkeit der Geschwindigkeitseinheit für einen Elektromotor des Elektroleichtfahrzeugs überschreitbar ist, wobei das erste Signalsendemittel entlang der Speiche im Wesentlichen außerhalb einer Feldreichweite für das Empfangsmittel (4) versetzt anzuordnen ist,
**dadurch gekennzeichnet, dass**
durch das Verstärkungsmittel mittels eines Magnetmittel (12) mit den Signalen des zweiten Signalsendemittels (13) parallele, gleichorientierte Magnetfeldlinien (10) ausgesendet werden.

## Claims

1. Device (1) for controlling and/or regulating speeds of an electric vehicle, in particular an electric vehicle, comprising a means of influencing a unit of speed for an electric motor of an electric vehicle, for controlling and/or regulating the unit of speed, a calculating unit of speed, a means of receiving (4) for: the motion signals of the motion of the wheel, the first signal transmitter being positioned on a spokes of the wheel of the electric vehicle, the first signal transmitter comprising a magnetic medium and transmitting motion signals with magnetic fields, and the first signal transmitter being provided substantially outside the field range of the receiving medium (4) and comprising a permanent magnet, a second signaling device (13) for time-dependent signals, appropriately constructed with movements of the first signaling device, and a amplification device (9), which provides amplification signals to amplify the signals of the second signaling device, so that the resulting switching pattern of the receiving device (4) affects the unit of calculation so that a given limit speed in the sense of the unit of calculation cannot be exceeded during given periods, whereby the agent may exceed the limit speed by means of a real speed of the unit of speed for an electric motor of the electric vehicle, the first signalling device being along the radius is to be positioned substantially outside the field range of the receiving medium (4), **characterised by** the fact that the reinforcement medium (9) comprises a magnetic medium (12) with the signals of the second signaling medium (13) parallel, equally oriented magnetic field lines (10).

2. Device according to Claim 1, **characterised by** the fact that the second signaling device (13) comprises a magnetic coil (21) which is to be operated in a time-dependent manner.

3. Device according to one of Claims 1 to 2, **characterised by** the fact that the reinforcement device (9) is positioned parallel to the receiving device (4), in particular at a predetermined distance (20), in particular by approximately three diameters of the receiving device (4), so that a triggering of the receiving device (4) can be achieved by means of rectified signals from the second signal emitter (13).

4. Device according to one of Claims 1 to 3, **characterised by** the fact that the second signaling device (13) is positioned parallel to the receiving device (4), in particular below the receiving device (4) at a predetermined distance (19) such that the signals of the second signaling device (13) correspond to the receiving device (4) with a frequency of wheel rotation depending on time. Activate the frequency, in particular close the reed switch (5).

5. Device according to one of Claims 1 to 4, **characterised by** the fact that the device comprises an attachment box, the second signaling device (13) and/or the reinforcement device (9) being placed in the attachment box (17) which must be placed close to the receiving device (4) in particular on a wheel carrier.

6. Method for using a device (1) for controlling and/or regulating speeds of an electric vehicle, in particular an electric bicycle, according to any of Claims 1 to 5, whereby an agent for influencing a unit speed of an electric motor of an electric vehicle is acting on the unit speed, for controlling and/or regulating the speed a unit in which a processing unit for determining a processing speed is acting on a processing unit where a receiving device (4) receives motion signals of the motion of the wheel, the receiving device (4) includes a reed switch (5) which, when a magnetic field strength is below or exceeded a specified time limit (6), is closed or opened, whereby an initial signaling device for transmitting motion signals is placed on a radius of the wheel, the first signaling device comprising a magnetic device and transmitting motion magnetic signals with magnetic fields, and the first signaling device being provided outside a field radius for the receiving device (4) and comprising a permanent magnet, provide for a second signaling device (13) for time-dependent signals appropriately constructed with movements of the first signaling device,
where an amplification device (9) provides amplification signals to amplify the signals of the second signal transmitter in such a way that a switching pattern of the receiver resulting from the resulting field strengths essentially at the location of the receiver (4) results in an action on the computer unit, so that, in specified periods of time, a the specified limit speed in the sense of the unit of calculation is not exceeded, whereby the means of action, when influencing the speed unit, may exceed the limit speed by means of a real speed unit for an electric motor of the electric vehicle, the first means of signaling along the radius being essentially outside the field range for reception. means (4) is **characterised by** the fact that the reinforcement agent emits magnetic field lines (10) parallel to the signals of the second signaling agent (13) by means of a magnetic medium (12).

## Revendications

1. Dispositif (1) pour la commande et/ou le réglage de la vitesse d'un véhicule électrique léger, notamment un véhicule électrique, comprenant un agent agissant sur une unité de vitesse d'un moteur électrique du véhicule électrique, pour la commande et/ou le réglage de l'unité de vitesse, une unité de calcul pour la détermination d'une opération de calcul vitesse: un récepteur (4) pour les signaux de mouvement de la roue, le premier signal étant placé sur un rayon de la roue du véhicule électrique, le premier signal étant composé d'un signal magnétique et émettant des signaux de mouvement par des champs magnétiques, et le premier signal étant essentiellement en dehors d'une portée de champ pour: le récepteur (4) est prévu et comprend un aimant permanent,
un second agent de signalisation (13) pour les signaux en fonction du temps, construits en conséquence avec les mouvements du premier moyen de signalisation, et un agent d'amplification (9) qui fournit des signaux d'amplification pour amplifier les signaux du second moyen de signalisation, de sorte que la trajectoire de commutation résultante du récepteur (4) puisse avoir une influence sur l'unité de calcul est telle qu'une vitesse limite spécifiée dans l'unité de calcul ne peut être dépassée pendant des périodes données, l'agent agissant sur l'unité de vitesse agissant sur la vitesse limite par l'intermédiaire d'une vitesse réelle de l'unité de vitesse pour un moteur électrique de l'unité de vitesse que le premier moyen de signal doit être placé le long du rayon sensiblement en dehors de la portée du récepteur (4), **caractérisé par le fait que** l'amplificateur (9) comprend un moyen magnétique (12) avec les signaux du second moyen de signal (13) des lignes de champ magnétique parallèles (10).

2. Dispositif selon la revendication 1, **caractérisé par le fait que** le second moyen de signalisation (13) comprend une bobine magnétique (21) qui doit être actionnée en fonction du temps.

3. Dispositif selon l'une des revendications 1 à 2, **caractérisé par le fait que** l'amplificateur (9) est disposé parallèlement au récepteur (4), en particulier à une distance prédéterminée (20), en particulier d'environ trois diamètres du récepteur (4), de sorte que des signaux orientés de la seconde source (13) permettent de déclencher le récepteur (4).

4. Dispositif selon l'une des revendications 1 à 3, **caractérisé par le fait que** le second moyen de signalisation (13) est parallèle au moyen de réception (4), en particulier au-dessous du moyen de réception (4), à une distance prédéterminée (19) de telle sorte que les signaux du second moyen de signalisation (13) courent le moyen de réception (4) en fonction du temps avec une fréquence de rotation de la roue déclencher la fréquence de réponse, en particulier fermer l'interrupteur Reed (5).

5. Dispositif selon l'une des revendications 1 à 4, **caractérisé par le fait que** le dispositif comporte un boîtier d'appui, le second agent de signalisation (13) et/ou l'agent d'amplification (9) étant placé dans le boîtier d'appui (17) placé à proximité du récepteur (4), notamment sur un support de roue.

6. Méthode d'utilisation d'un dispositif (1) pour la commande et/ou le réglage de la vitesse d'un véhicule électrique léger, en particulier d'un vélo électrique, selon l'une des revendications 1 à 5 , au moyen d'un agent agissant sur l'unité de vitesse d'un moteur électrique du véhicule électrique agissant sur l'unité de vitesse, pour la commande Une unité de calcul agissant sur une unité de calcul pour déterminer une vitesse de calcul, recevant par un récepteur (4) les signaux de mouvement de la roue, le récepteur (4) comprenant un commutateur d'arrosage (5) qui, en cas de passage en dessous ou de dépassement d'une unité de vitesse, une intensité de champ magnétique limite à maintenir dans le temps (6), fermée ou ouverte, avec un premier agent de signalisation pour envoyer des signaux de mouvement sur un rayon de la roue, le premier agent de signalisation comprenant un agent magnétique et émettant des signaux magnétiques de mouvement avec des champs magnétiques, et le premier agent de signalisation en dehors d'un champ de champ soit prévu pour le récepteur (4) et comporte un aimant permanent, un second moyen de signalisation (13) étant prévu pour les signaux en fonction du temps, construits de manière appropriée avec les mouvements du premier moyen de signalisation, où un amplificateur (9) fournit des signaux d'amplification pour amplifier les signaux du second émetteur de signal de sorte qu'un commutateur du récepteur (4) résultant des intensités de champ résultantes essentiellement à l'emplacement du récepteur (4) exerce une influence sur l'unité de calcul, de sorte que, dans des périodes données, lorsqu'une vitesse limite spécifiée dans l'unité de calcul n'est pas dépassée, l'agent agissant sur l'unité de vitesse pouvant dépasser la vitesse limite par une vitesse réelle de l'unité de vitesse d'un moteur électrique du véhicule électrique léger, le premier agent de signalisation étant: être placé le long d'un rayon sensiblement en dehors de la portée du récepteur (4), **caractérisé par** l'émission par l'amplificateur, au moyen d'un support magnétique (12) avec les signaux du second média (13), de lignes de champ magnétique (10) parallèles et orientées de façon égale.
